# EUROPEAN PATENT SPECIFICATION

(11) **EP 2 092 171 B1**
(45) Date of publication and mention of the grant of the patent: **03.05.2017**
(21) Application number: 07856186.7
(22) Date of filing: 20.11.2007
(51) Int. Cl.: F02B 29/04

(54) **GAS INTAKE DEVICE**
GASANSAUGVORRICHTUNG
DISPOSITIF D'ADMISSION DE GAZ

(30) Priority: 20.11.2006 FR 0655001
(43) Date of publication of application: 26.08.2009
(73) Proprietor: Valeo Systèmes de Contrôle Moteur, 95892 Cergy Pontoise (FR)
(72) Inventor: RIMPAU, Arnold, 38114 Braunschweig (DE); WESTPHAL, Christian, 38527 Meine (DE); FISCHER, Udo, 38104 Braunschweig (DE); PIETROWSKI, Herbert, 74385 Pleidelscheim (DE); LEROUX, Samuel, 78300 Poissy (FR); LALLEMANT, Mathieu, 75019 Paris (FR)
(74) Representative: Santarelli
(86) International application number: PCT/EP2007/010007
(87) International publication number: WO 2008/061692

(56) References cited:
- EP-A- 1 496 221
- EP-A- 1 533 512
- DE-A1- 19 853 455
- FR-A1- 2 855 603
- FR-A1- 2 864 582
- US-A1- 2004 110 429

## Description

The present invention relates to a gas intake device, for introducing said gases into the cylinder head of an automotive vehicle thermal engine. By the term "gas" there is meant air or a blend of air and exhaust gas, optionally supplemented with a liquid and/or gaseous fuel.

An automotive vehicle thermal engine comprises a combustion chamber, generally made with a plurality of cylinders, wherein a blend of an oxidizing agent and a fuel is burnt off for producing the engine work. The oxidizing agent comprises air, either pressurized or not, depending on whether the engine comprises a turbocompressor or not. The air could additionally be mixed with exhaust gases; these are referred to as recirculating exhaust gases. The gases fed into the combustion chamber are referred to as feed gases.

Feed gases are received at an "intake manifold", often referred to by the man of the art using the English term "intake manifold". The manifold is connected with the cylinder head of the combustion chamber, i.e. the cylinder inlet. Depending on the engine power, gases could be cooled, either entirely or partially, or not cooled. Two pipes therefore feed the manifold: one directly supplying feed gases into the manifold, the other indirectly supplying the latter via a heat exchanger, allowing for gases to be cooled down passing therein, or in some cases, to be heated.

A permanent objective in the engine industry relates to compacting the feed gas intake device.

The Patent Application DE 199 02 504 discloses a housing, wherein the heat exchanger is directly connected, at the outlet, with the manifold inlet volume. It however still remains difficult to supply the uncooled gases.

The Patent Application EP 1 533 512 discloses an air intake system provided with an exhaust gas recirculation device and a supply air distributor provided with a fixation flange through which it is fixed to the engine cylinder head. The supply air distributor has an upper wall defining a manifold channel in which are provided several holes to allow the recirculated exhaust gas to pass from the manifold channel into the distributor. The exhaust gas recirculation device comprises a switching valve and a heat exchanger both fixed on the supply air distributor through a cover plate forming a lid for the channel. The valve comprises a housing having an input portion for the exhaust gas, a first output portion opening vertically into the manifold channel and a second output portion opening horizontally directly into the heat exchanger at the level of a gas inlet formed on a face of the parallelepiped enclosure. The valve is configured for introducing the recirculated exhaust gas either directly into the channel, either indirectly via the heat exchanger.

Document DE 198 53 455 A1 discloses a further example of an air intake system with exhaust gas recirculation. The present invention aims at providing a gas intake device in a compact form.

The present invention therefore provides a gas intake device for introducing said gases into the cylinder head of an automotive vehicle thermal engine, comprising a gas intake manifold and a manifold gas feed valve, communicating with the manifold directly and indirectly through a heat exchanger, the valve and the manifold being integrally made as a unit module adapted to be secured onto the engine cylinder head.

Through the invention, the valve makes it possible, as it opens into the manifold directly and indirectly, forming with the latter a unit module, to get a compact device. Such a device is, in addition, little responsive to vibrations, as the valve is directly integral with the manifold. On the other hand, such a unit module has a universal character, allowing it to be adapted with various engine constructions.

Preferably, the valve is a double valve, comprising an inlet conduct, a direct outlet conduct and an indirect outlet conduct, such valve further comprising means, for example, to control the feed gas flow rate in each conduct. The heat exchanger is also integrated as a unit module with the valve and the manifold. As the heat exchanger opens into a gas inlet housing and a gas outlet housing, the indirect outlet conduct of the valve opens into the gas inlet housing of said heat exchanger.

Preferably in such a case, the manifold forms the outlet housing of said heat exchanger.

According to a particular embodiment, the module comprises a monobloc housing defining, together with a lid, a volume wherein the inlet housing of said heat exchanger, the manifold and a housing for said heat exchanger are arranged.

According to another particular embodiment, said heat exchanger forms the structural element of the module, the inlet housing and the manifold being secured on said heat exchanger.

According to a feature of the invention, an intake module for the exhaust gases is assembled on the unit module and opens into the manifold.

Preferably in such a case, the valve plays as a regulatory function to set the flow rate of exhaust gases introduced into the manifold, for example, a regulatory function to set the flow rate of gases directly introduced into the manifold and/or a regulatory function to set the flow rate of gases introduced into the gas inlet housing.

According to an embodiment, the inlet housing and the outlet housing of the exchanger each comprise a projection extending in parallel beyond a housing occupied by the exchanger, said valve being arranged between said two projections.

According to the invention, said projection of the inlet housing is provided with a port and said outlet housing is also provided with a port, respectively provided for the gas inlet into said gas inlet housing and said gas outlet housing, said ports being located oppositely, and said indirect and direct outlet conducts respectively opening into said ports.

According to an embodiment, said inlet housing extends along a first longitudinal axis and said outlet housing along a second longitudinal axis, said first and second axes being parallel and defining a plane, referred to as an exchange plane, and the valve inlet conduct is oriented perpendicularly to said exchange plane.

According to an embodiment, the direct outlet conduct and/or the indirect outlet conduct comprise gas flow rate regulatory flaps, said flaps being for example provided with a hinge axis oriented in parallel to said exchange plane.

This invention further relates to an automotive vehicle thermal engine, comprising a combustion chamber, a cylinder head forming an inlet of the combustion chamber and an intake device with the features of the device as shown hereinabove.

The invention will be better understood referring to the following description of the preferred embodiment of the device and the engine according to the invention, referring to the accompanying drawings, wherein:
- Fig. 1 is a schematic block diagram showing the architecture of the fluid circuit for gases from the engine according to this invention;
- Fig. 2 shows an exploded perspective view of the device of the invention, according to a first embodiment;
- Fig. 3 shows a perspective view of a particular embodiment of the device on Fig. 2, once assembled;
- Fig. 4 shows a perspective view of a second embodiment of the device of the invention;
- Fig. 5 shows an exploded perspective bottom view of the device on Fig. 4; and
- Fig. 6 shows an exploded perspective bottom view of the device on Fig. 4.

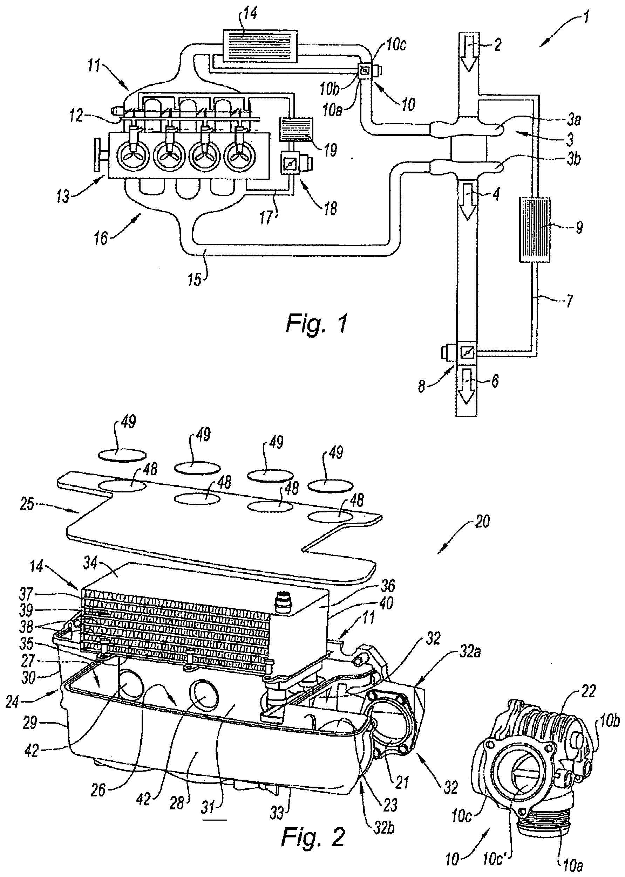

Referring to Fig. 1, the engine 1 of the invention comprises a combustion chamber 13, here made with four cylinders, wherein plungers are movably assembled, as well known. The engine feed air 2 is introduced through a turbocompressor 3, comprising a compressor 3a, driven by a turbine 3a, the latter being driven by the exhaust gases 4. Once the turbine 3b has been driven, the exhaust gases 4 are either vented through exhaust pipes 6, or "recirculated", i.e. they are reinjected into the feed air flow 2. Such a recirculation of the exhaust gases is also called "low pressure". Recirculated exhaust gases 7 are, to the this end, collected at the level of a valve 8, cooled down in a heat exchanger 9 for the low pressure exhaust gases and injected into the feed air flow 2 upstream the compressor 3a.

Such a blend of feed air with recirculated exhaust gases 7 makes it possible to decrease the nitrogen oxide emissions.

Feed gases 2, 7 therefore comprise at the compressor inlet 3a, either only air 2, or a blend of air 2 and low pressure recirculated exhaust gases 7, such a blend being regulated by the low pressure exhaust gas recirculation valve 8. Such feed gases 2, 7 are pressurized in the compressor 3a and supplied towards a feed valve 10 of a manifold 11.

The manifold 11 is adjusted on a cylinder head 12, that provides the closure of the top of the cylinders of the combustion chamber 13 and forms part of the volume of such a combustion chamber 13, as known. The manifold 11 allows for the intake of the feed gases into the cylinder head 12. It is sometimes referred to, as for the manifold 11, as feed gas dispenser into the cylinders.

The feed valve 10 of the manifold 11 is a double valve, i.e. it comprises an inlet conduct 10a and two outlet conducts 10b, 10c. The first outlet conduct 10b opens directly into the manifold 11; this will be referred to, hereinunder, as the direct outlet conduct 10b. The second outlet conduct 10c opens into a heat exchanger 14, the outlet volume of which opens into the manifold 11; said second conduct 10c therefore opens, indirectly, through said heat exchanger 14, into the manifold 11; this will be referred to, hereinunder, as the indirect outlet conduct 10c.

Thus, feed gases 2, 7 arriving into the inlet conduct 10a of the valve 10 could be, either directly introduced into the manifold 11 through the direct outlet conduct 10b, or indirectly introduced into the manifold 11, through the indirect outlet conduct 10c, creating a path through said heat exchanger 14. The double valve 10 is arranged so as to make it possible for feed gases 2, 7 to pass either entirely or in part in either one and/or the other outlet conducts 10b, 10c; it is thus possible to set the proportion of feed gases 2, 7 subjected to a thermal treatment, for example, a cooling operation, and the one that is not subjected to such a treatment.

Feed gases 2, 7 are blended with fuel and burnt off in the combustion chamber 13. When leaving the latter, exhaust gases 15, being at a high pressure, are collected in an exhaust manifold 16 and directed to the turbine 3b, as explained hereinabove.

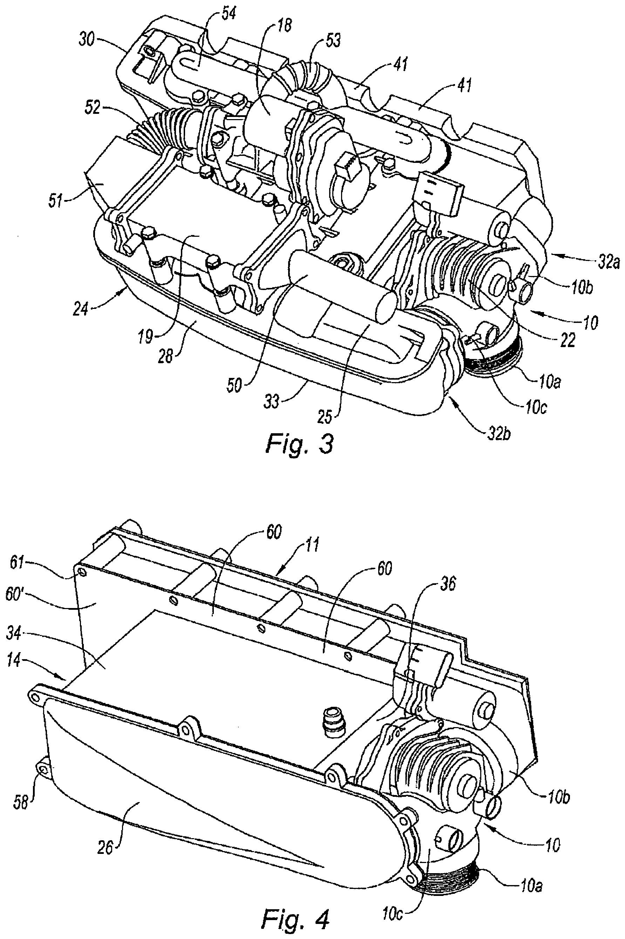

Part of such high pressure exhaust gases 17 could also be, according to a particular embodiment shown on Fig. 1 and 3, recirculated. A recirculated gas pipe 17 is, for that purpose, arranged on the exhaust manifold 16 in order to by-pass part of the exhaust gas flow, the flow rate of such gases 17 being set by a valve 18. Such high pressure recirculated exhaust gases 17 are cooled down in a heat exchanger 19 and reinjected directly into the intake manifold 11. This a so-called "high pressure" exhaust gas recirculation.

Thus, exhaust gases could be blended with the feed air 2, either upstream the compressor 3a, through the low pressure recirculation, or in the manifold 11, through the high pressure recirculation.

As shown on Fig. 2 to 6, the double valve 10 and the manifold 11 are integrated as a unit module 20, intended to be secured on the cylinder head 12 of the engine. The direct outlet conduct 10b of the double valve 10 is, for that purpose, directly fixed at the level of an inlet port 21 of the manifold 11, and therefore opens directly into the volume of the manifold 11. Such a module 20 is compact and is less responsive to vibrations.

More specifically, the inlet conduct 10a and both outlet conducts 10b, 10c are arranged so that the incoming gases could pass, either through the direct outlet conduct 10b, or through the indirect outlet conduct 10c, or through both; in the so-described embodiment of the invention, gases cannot simultaneously pass through both conducts 10b, 10c. The valve 10 comprises to this end two butterfly flaps 10b', 10c', each in an outlet conduct 10b, 10c, respectively. The butterfly flap 10c' is clearly shown on Fig. 2. Obviously, any other flow rate regulating means could be contemplated instead of butterfly flaps 10b', 10c', as, for example, throttles or flaps.

Butterfly flaps 10b', 10c' could be each driven by a respective actuating engine. According to a preferred embodiment of the invention, a single engine 22 drives both butterfly flaps 10b', 10c'. The valve 10 could, for example, in such a case be similar to the valve as disclosed in French Patent Application no. 0603711 filed on April 26, 2006 in the name of the Applicant. Such a valve cannot allow all the possible opening combinations of conducts 10, 10c, but only the three following operating modes:
- a first mode wherein the butterfly flap 10b' is partially opened, adjustably, between its closing position and its opening position, while the butterfly flap 10c' is closed;
- a second mode wherein both butterfly flaps 10b', 10c' are closed; and
- a third mode wherein the butterfly flap 10b' is closed and the butterfly flap 10c' is opened.

Switching from one mode to the other is possible using a particular gear connecting the engine 22 with butterfly flaps 10b', 10c', as disclosed in the above-mentioned Patent Application.

With such a double valve 10:
- in the first operating mode, the feed gases 2, 7 are directly directed into the manifold 11, their flow rate being adjusted by the butterfly flap 10b' being more or less opened;
- in the second operating mode, gas feeding of the manifold 11 is closed; and
- in the third operating mode, the feed gases 2, 7 are indirectly supplied to the manifold 11 through the heat exchanger 14.

It is to be noticed that with such a double valve 10, it not possible to separate feed gases 2, 7 into two simultaneous flows, one direct and the other indirect, towards the manifold 11, according to the herein disclosed embodiment of the invention; moreover, the indirect flow cannot be adapted (the butterfly flap 10c' is either opened or closed). The double valve 10 could be, obviously, arranged so as to allow for such operating modes, either using both engines each actuating a butterfly flap, or using any other appropriate means. The advantage of such a valve 10 used herein is its compactness and its simplicity of use.

In the invention, the heat exchanger 14 is also part of the unit module 20 intended to be secured on the cylinder head 12, the indirect outlet conduct 10c of the valve 10 being connected with a gas inlet port 23 in the inlet housing of said heat exchanger 14 and the manifold 11 forming directly the outlet volume of said heat exchanger 14. The intake device of the feed gases is even more compact and less sensitive to vibrations, as the module 20 comprises the manifold 11, the double valve 10 and said heat exchanger 14. Thus, the direct and indirect intake - via the heat exchanger 14 - of gas into the manifold 11 occurs within the same unit module 20.

In the embodiment of Figs. 2 and 3, the module 20 comprises a monobloc housing 24, defining, together with a lid 25, a volume wherein a gas inlet housing 26 is arranged in said heat exchanger 14, as well as a housing 27 for said heat exchanger 14 and the manifold 11. The valve 10 forms with such a housing 24 the unit module 20 intended to be secured on the cylinder head 12 of the engine. Said heat exchanger 14 opens into the gas inlet housing 26 and into the manifold 11, forming the gas outlet housing of said heat exchanger 14.

The housing 24 will be described more specifically. For simplicity reasons, the elements will be presented by reference to front, back, high, low and right and left side positions; such positions are selected with respect to the housing 24 orientation on Fig. 2, but do not prejudge the way the housing 24 is secured onto a engine. It is all the same for notions of horizontality and verticality.

The housing 24 comprises a back wall 28, a left side wall 29, a left side shoulder 30, laterally projecting to the left relative to the left side wall 29 and in front of the latter; a front wall 31 and a right side portion 32 for connection with the double valve 10. It furthermore comprises a bottom wall 33 and is closed from the top by a lid 25. The right side portion 32 for connection with the valve 10 comprises a front lug 32a or front projection 32a, and a back lug 32b, or back projection 32b, projecting laterally towards the right, being spaced apart from one another by a centre wall 32c.

The double valve 10 is secured between the two lugs 32a, 32b, in abutment on the centre wall 32c. As previously noticed, the direct outlet conduct 10b of the double valve 10 is fixed at the level of the inlet port 21 of the manifold 11 being arranged on the back portion of the front lug 32a and directly opening into the volume of the manifold 11. The indirect outlet conduct 10c of the double valve 10 is in communication with, and preferably, fixed at the level of the gas inlet port 23 in the inlet housing 26 of said heat exchanger 14, the gas inlet port 23 being arranged on the front portion of the back lug 32b and opening into the inlet housing 26 of the heat exchanger 14.

The heat exchanger 14 comprises a top wall 34, a bottom wall 35, a right side wall 36 and a left side wall 37. Such walls 34, 35, 36, 37 are made in metal, here in aluminum. They form a frame-forming metal sheath within which the heat exchanger 14 comprises a stack of plates 38, providing for a gas passage therebetween, between an inlet section 39 and an outlet section 40; the plates 38 are hollow and a fluid circulation, here for cooling, for example water is arranged therein. Thus, gases passing into said heat exchanger 14 exchange heat through the plates 38, arranged sufficiently thin, with water circulating in the latter. The stack of plates 38 therefore forms a heat exchanging means with feed gases 2, 7 crossing said heat exchanger 14 from the inlet section 39 to the outlet section 40. The cooling fluid feed occurs through an inlet pipe and an outlet pipe, all the plates 38 communicating between them. This is referred to as a so-called "plate" heat exchanger.

As a summary, such a heat exchanger 14 comprises a metal frame defining an enclosure wherein means extend for exchanging heat with gases crossing the enclosure, from the inlet section 39 to the outlet section 40. Such a structure is well known to the man of the art and it is not necessary to describe it in further detail herein. It goes without saying that any other heat exchanger of an appropriate type could be used.

The heat exchanger 14 is housed in its accommodation casing 27 within the housing 24.

The lid 25, the bottom wall 33, the back wall 28, the left side wall 29 and part of the right side portion 32 of the housing 24 provide, with the inlet section 39 of the heat exchanger, for the inlet housing 26 of said heat exchanger 14, into which the indirect outlet conduct 10c of the double valve 10 opens.

The lid 25, the bottom wall 33, the shoulder 30, the front wall 31 and part of the right side portion 32 of the housing 24 provide, with the outlet section 40 of said heat exchanger 14, for the manifold 11, into which the direct outlet conduct 10b of the double valve 10 opens. As one of the walls thereof is formed by the outlet section 40 of said heat exchanger 14, the manifold 11 directly forms the gas outlet housing of said heat exchanger 14.

Thus, the feed gases 2, 7, supplied at the level of the inlet conduct 10a of the double valve 10, could either pass through the direct outlet conduct 10b of the double valve 10 and directly open into the manifold 11, or pass through the indirect outlet conduct 10c and open into the inlet housing 26 of said heat exchanger 14, pass between the plates 38 of the heat exchanger 14 and, at the outlet of the latter, open into the manifold 11.

All this feed gas circulation, directly and indirectly - via said heat exchanger 14 - from the double valve 10 up to the manifold 11, occurs in the unit module 20.

The manifold 11 opens, at the level of the front wall 31 of the housing 24, on the cylinder head 12 of the engine, through ports 42 arranged in the front wall 31 of the housing 24. Gas flow butterfly flaps, not shown, could be provided in the manifold. Such butterfly flaps allow to modify the flow of gas leaving the manifold 11 and to induce disruptions in such a flow, in order to improve the gas blend at the inlet of the cylinder head 12. Such a mechanism is commonly called by the man of the art, using the English word "swirl".

Ports 48 could be provided on the lid 25 of the housing. These are high pressure exhaust gas intake ports 17. In the embodiment on Fig. 2, such ports 48 are closed by lids 49, as the high pressure exhaust gases are not being recirculated. There could as well be no ports 48, as these are plugged. The presence of such ports 48 has this advantage that the lid 25 is therefore standardized, and hence, all purpose, and that the module 20 could therefore be used both in a engine without high pressure exhaust gas recirculation, as the one of the embodiment on Fig. 2, and in a engine with recirculation of such gases, as the one of the embodiment on Fig. 3. It is to be noticed that the butterfly flaps disrupting the gas flow at the outlet of the manifold 11 are not themselves obviously needed in the case where the high pressure exhaust gases are not recirculated; they could however be maintained if it is desired to disrupt the gas flow at such a location.

The embodiment on Fig. 3 will be now described. The module 20 is strictly identical to the module 20 in the embodiment on Fig. 2, except that it is assembled in a engine wherein high pressure exhaust gases 17 are supposed to be recirculated. Thus, a high pressure exhaust gas intake module 17 is integrated with the unit module 20, so forming a new module being compact. The reference annotations for the various elements are identical. It could be noticed that the lid 25 of the housing 24 of the module 20 in the embodiment of Fig. 2 could comprise a plurality of bores, not shown, for fixing the various elements of the high pressure exhaust gas intake module: this is due to the above-mentioned standard and universal character of the lid 25 and the housing 24.

The high pressure exhaust gases 17 are supplied through a feed pipe 50, connected with the exhaust manifold 16, as explained hereinabove. Such a pipe 50 opens into said heat exchanger 19 for high pressure exhaust gases, here of the same type as said heat exchanger 14 for the feed gases 2, 7. At the outlet of said heat exchanger 19, the exhaust gases 17 pass in the high pressure exhaust gas flow rate regulation valve 18. It could be noticed that the heat exchanger 19 and the valve are here, serially, in the reverse order, as compared to Fig. 1, but this does not matter. Said heat exchanger 19 and the valve 18 are connected with one another through a first connection 51 and a second connection 52, forming half a turn, allowing for the valve 18 to be secured next to said heat exchanger 19 on the lid 25, making the assembly compact.

The valve 18 is connected, at the outlet, with a connection 53, to a feed pipe 54 for the manifold 11. Such a pipe 54 is commonly referred to by the man of the art as a "feeder" or a "rail"; this is a pipe comprising a main body, from which extend out four small pipes, not shown on the figures, connecting the main body with ports arranged in the lids 49 and with ports 48 pierced on the lid 25 of the housing 24. The small pipes and ports 48 could be sized so as to show the same section, thus avoiding the presence of lids 49.

Thus, the high pressure exhaust gases 17 open into the manifold 11 at the level of the ports 48. Optional rotative flaps assembled on the outlet ports of the manifold allow a homogeneous blend of high pressure exhaust gases 17 with feed gases 2, 7 from the double valve 10. Using the compact assembly of such an embodiment, the high pressure exhaust gases 17 are injected into the manifold 11 at the vicinity of the ports 42; their blend with the feed gases 2, 7 is thereby improved.

A problem arises for recirculation of exhaust gases 17. Indeed, the pressure in the intake manifold 11, assembled on the cylinder head 12, is not necessarily lower than the pressure in the exhaust gas 17 manifold 16. Now, in order to provide for the recirculation of high pressure exhaust gases 17, there should be a pressure difference allowing to draw such gases 17 from the exhaust manifold 16 to the intake manifold 11; in other words, a depression should be generated in the intake manifold 11 compared to the exhaust manifold 16.

With a view to solving such a problem, the double valve 10 here fills an additional function, being a regulatory function of the recirculated high pressure exhaust gas flow 17. Because the double valve 10 is assembled as a unit module with the manifold 11, with the direct outlet conduct 10b directly opening into the volume of the manifold 11, the inlet conduct 10a of the valve 10 could be placed in direct fluid communication with the manifold 11, if the indirect outlet conduct 10c is closed. In such a case, partially plugging the direct outlet conduct 10b of the valve 10, so partially closing the corresponding butterfly flap 10b', the flow rate from the inlet conduct 10a of the valve 10 is restricted. Now, when the engine is running, plungers move to and fro in the cylinders, drawing the gases from the manifold 11; in other words, plungers and cylinders act as pumps. If, nevertheless, the section of the direct outlet conduct 10b of the valve is decreased, there occurs a depression in the manifold 11, as feed gases 2, 7 could not be introduced in a sufficient amount compared to the pumping action exerted by the plungers and the cylinders. Such a depression leads the recirculated exhaust gases 17 to be drawn, if the valve 18 allowing those gases 17 to pass is opened.

Thus, the double valve 10 allows to improve and control the flow rate of the recirculated high pressure exhaust gases 17 in the intake manifold 11. To this end, the butterfly flap 10c' of the indirect outlet conduct 10c is closed and the butterfly flap 10b' of the direct outlet conduct is partially opened. The more the latter butterfly flap 10b' is closed, the higher the created depression is, and the higher the flow rate of the recirculated high pressure exhaust gases is, and vice versa.

The double valve 10 therefore fills, in such a case, a double function: a regulatory function for the feed gases 2, 7 between the direct path and the indirect path, on the one hand, and a regulatory function for the flow rate of recirculated high pressure exhaust gases 17, on the other hand.

The double valve 10 moreover fills here a third function, being a function aiding to stop the engine: during such a stop, both pipes 10b, 10c are closed, in order to shut off the manifold feed 11. Such a closure could occur progressively - here by means of the butterfly flap 10b' of the direct outlet conduct 10b, that can be progressively closed - allowing to avoid too sudden state modifications within the engine.

It could be noticed that using the double valve 10 as presented in French Patent Application n° 0603711 is very appropriate here, in so far as such a valve allows for operating modes being needed for all three functions of the double valve 10 as being presented hereinabove:
- regulating the flow rate of the feed gases 2, 7 between the direct and indirect paths, through opening, either the butterfly flap 10c' of the indirect conduct 10c, or of the butterfly flap 10b' of the direct conduct 10b, at least on a given range of flow rate;
- regulating the flow rate of the recirculated exhaust gases 17 through closing the butterfly flap 10c' of the indirect conduct 10c and, more or less important, opening of the butterfly flap 10b' of the direct conduct 10b;
- assisting in stopping the engine through closing the butterfly flap 10c' of the indirect conduct 10c and progressive closing of the butterfly flap 10b' of the direct conduct 10b.

The embodiment of Figs. 4 to 6 solves an additional problem and is therefore an improvement of the invention. Before describing said embodiment, this problem will be explained.

Both in the above-presented Patent Application DE 199 02 504 or in the embodiments of the invention, as presented hereinabove referring to Figs. 2 and 3, said heat exchanger 14 is housed in a housing 24. Such a housing 24 provides for the inlet housing 26 and the outlet housing 11 of said heat exchanger 14 and should support a number of elements, including, as far as the hereinabove presented embodiments are concerned, said heat exchanger 14, the double valve 10 and, if desired, the high pressure exhaust gas intake module. In addition to such supporting stresses, the housing 24 is submitted to pressure stresses associated to the circulation of pressurized feed gases 2, 7. The lid 25, more particularly, covers all the housing 24 and is subjected to the whole pressure. On the other hand, the housing 24 is subjected to vibrations generated by all the elements that it supports.

Such a housing 24 should therefore being made more rigid, in order not to swell under the pressure stresses or to avoid being damaged as a result of vibrations. Such a reinforcement is costly and involves a higher weight of the housing 24.

The embodiment of Figs. 4 to 6 aims at solving such problems.

The reference annotations used for describing such an embodiment are the same as for Figs. 1 to 3, for identical or similar elements. Thus, an element, filling the same function, but with a different structure, will be designated by the same reference annotation, for consistency and simplicity reasons of the explanation.

This is why such an embodiment provides for said heat exchanger 14 forming the structural element of the gas intake device. The inlet housing 26 of said heat exchanger 14 and the unit module 20, comprising the manifold 11, forming here the outlet housing for said heat exchanger 14, and eventually the double valve 10, are fixed on said heat exchanger 14. Thus, said heat exchanger 14 is integrally formed with the unit module 20 and forms the structural element thereof.

As used herein, a structural element means a structure element supporting the feed gas intake device. More particularly, such an element, here a metallic element, possesses mechanical strength characteristics allowing it to support the other elements of the device - being inserted onto it, either directly of indirectly - while it also provide the connection with the remainder of the engine, to which it allows to fix and maintain all the device.

As said heat exchanger 14 comprises a metallic frame formed by its walls 34, 35, 36, 37, it is stiff, resistant and capable to fill such a structural function. Because of such a structure, wherein all the volumes are separated, only the surfaces needed for the device operation are exposed to some pressure, no surface such as the portion of the lid 25 located above said heat exchanger 14 in the previous embodiments is submitted to pressure stresses. Moreover, the most exposed surface of the device is the frame of said heat exchanger 14, being more precisely the most resistant element.

Said heat exchanger 14 which only filled, in the state of the art, and in the hereinabove presented embodiments, its heat exchanger function, therefore fills an additional function of structural element. Said heat exchanger is therefore provided with a structuring function it did not have. The whole device is fixed around and on such a heat exchanger 14.

The resistance to vibrations is moreover better since, on the one hand, said heat exchanger 14 is no longer housed in a housing able to support such vibrations, on the other part, the other elements are interdependent with such a heat exchanger 14, being rigid.

The device therefore has a better resistance to pressure, vibrations and the temperature.

Moreover, because of the separation of the different volumes (inlet volume of said heat exchanger, exchange volume of said heat exchanger and outlet volume of said heat exchanger), it is possible to expect that fixing the various elements occurs such that no bolt is located in the volume or in communication with the volume of the manifold 11. Thus, should a screw become unscrewed, it is not able for it to be drawn by the cylinders via the manifold 11 and to damage the engine.

Such second embodiment will be now described more in detail, referring to Figs. 4 to 6.

Similarly to the previous description, said heat exchanger 14 comprises a top wall 34, a bottom wall 35, a right side wall 36 and a left side wall 37. Such walls 34, 35, 36, 37 are made in metal, here in aluminum. They form a metallic sheath, within which said heat exchanger 14 comprises a stack of plates 38, providing for a gas passage therebetween, between an inlet section 39 and an outlet section 40; the plates 38 are hollow and a cooling fluid circulation, for example, water, is arranged therein; the plates 38 thereby form therefore a heat exchanging means with feed gases 2, 7 crossing said heat exchanger 14. The inlet and outlet means of the cooling fluid feed are presented under ref. 80, 80'.

A housing 26 for the inlet of the feed gases into said heat exchanger 14 is secured on said heat exchanger 14. Such a housing 26 defines a volume having its front section 26' opened opposite the inlet section 39 of said heat exchanger 14. The inlet housing 26 thus opens into said heat exchanger 14. Both sections 26', 39 are here identical.

Said heat exchanger 14 comprises a back flange 55 for fixing the inlet housing 26, extending in the plane and around the inlet section 39 of said heat exchanger 14. Such a flange 55 comprises a plurality of lugs 56 each pierced with a bore allowing a screw to pass, for securing the inlet housing 26, also comprising a flange 57 provided with corresponding lugs 58.

The back flange 55 of said heat exchanger 14 extends, on the right side part, in a plane of the inlet section 39, as a flange 59 for connecting the indirect outlet conduct of the double valve 10. Such a connecting flange 59 further comprises fixing lugs 56 adapted to cooperate with corresponding lugs 58 of the inlet housing 26 to allow screw to pass, for fixing the inlet housing 26 on said heat exchanger 14.

Such a connecting flange 59 comprises a gas inlet port 23 in the inlet housing 26 of said heat exchanger 14, and allows for the continuity of the shifting volume of the feed gases 2, 7, without any leak, from the inlet pipe 10a of the valve 10 up to the inlet section 39 of said heat exchanger 14, through the indirect outlet conduct 10c, the inlet port 23 and said inlet housing 26 of said heat exchanger 14. The feed gases 2, 7 could thereby be fed from the inlet conduct 10a of the valve 10 up to said heat exchanger 14. The indirect outlet conduct 10c of the valve 10 is pressed against the connection flange 59, preferably fixed on the latter with a gasket adapted in order to avoid any leak.

The manifold 11 comprises a top wall 11a, a bottom wall 11b, a left side wall 11c and a right side portion forming an lug 32a for the connection to the direct outlet conduct 10b of the double valve 10. It therefore defines a volume having its back section 11' opened opposite the outlet section 40 of said heat exchanger 14. Said heat exchanger 14 therefore opens directly into the manifold 11. Both sections 11', 40 are here identical. The left side wall 11c of the manifold 11 forms a shoulder 30, projecting towards the left, relative to its inlet section 11', just in front of it.

Said heat exchanger 14 comprises a front flange 60 for fixing to the manifold 11, extending in the plane and around the outlet section 40 of said heat exchanger 14. Said flange 55 is pierced with a plurality of bores 61 for allowing screws to pass, allowing the manifold 11 to be fixed, comprising corresponding bores 62, on said heat exchanger 14. The front flange 60 extends, on the left side, into a side flange 60' for fixing the shoulder 30 of the manifold 11 on said heat exchanger 14.

The outlet section 40 of said heat exchanger 14 directly opens into the manifold volume 11, forming the outlet housing thereof.

The double valve 10 is fixed at the level of the inlet port 21 of the manifold 11, through its direct outlet conduct 10b, for forming together therewith a unit module 20. Said module 20 is here directly fixed on said heat exchanger 14, as explained hereinabove. The inlet housing 26 is furthermore also fixed on the heat exchanger 14, the indirect outlet conduct 10c of the double valve 10 directly opening into the volume of said housing 26. Thus, the unit module 20 comprises here the double valve 10, the manifold 11, said heat exchanger 14 and the inlet housing thereof 26.

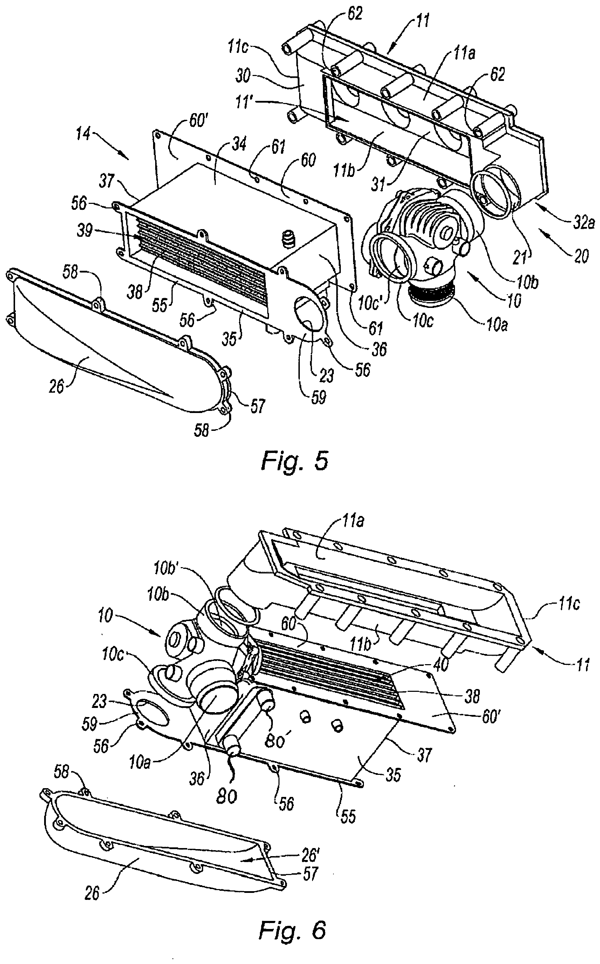

As previously, an actuator, not shown, could be provided for actuating flaps located in the manifold 11. The front wall 31 of the manifold 11 is here inserted and fixed thereon, as shown on the exploded view of Fig. 6.

The operation of the whole device is furthermore comparable with that of the device on Figs. 1 to 3. The device on Figs. 4 to 6 is provided without any high pressure exhaust gas intake module, but it is possible to add such a module, providing fixing points on said heat exchanger 14 and exhaust gas input ports on the top wall 11a of the manifold 11.

The heat exchanger 14 furthermore comprises means for fixing to the engine structure, as screws, for example, through bores 61,62. Thanks to such screws, said gas intake device is secured to said cylinder head in the same time as the manifold, which is taken into sandwich between said heat exchanger and said cylinder head, is secured to the heat exchanger.

## Claims

1. A gas intake device, for introducing said gases into the cylinder head of a thermal engine for an automotive vehicle, comprising a gas intake manifold (11) and a gas feeding valve (10) of the gas intake manifold (11), said gas feeding valve comprising an inlet conduct (10a), a direct outlet conduct (10b) and an indirect outlet conduct (10c), said gas feeding valve being adapted to introduce said gas into the gas intake manifold (11) respectively by a direct communication using the direct outlet conduct (10b) and an indirect communication through a heat exchanger (14) using the indirect outlet conduct (10c), the gas feeding valve (10) and the gas intake manifold (11) being integrated as a unit module (20) provided for being secured on the engine cylinder head, the heat exchanger (14) being also integrated in the unit module (20), **characterized in that** the heat exchanger (14) opens into a gas inlet housing (26) and a gas outlet housing, the indirect outlet conduct (10c) opens into the gas inlet housing (26), the direct outlet conduct (10b) opens into the outlet housing and the gas inlet housing (26) and the gas outlet housing each comprise a projection (32b, 32a) extending in parallel beyond a housing occupied by the heat exchanger (14), said gas feeding valve (10) is arranged between said two projections (32b, 32a), and said projection (32b) of the inlet housing (26) is provided with a port (23) and said projection (32a) of the outlet housing is also provided with a port (21), said ports (23, 21) being respectively provided for the inlet of gas into the gas inlet housing (26) and the gas outlet housing, said ports (23, 21) being located oppositely and said indirect and direct outlet conducts (10c, 10b) respectively opening into said ports (23, 21).

2. A device according to claim 1, wherein the gas feeding valve (10) is a double valve, comprising an inlet conduct (10a), a direct outlet conduct (10b) and an indirect outlet conduct (10c), such valve further comprising means to control the feed gas flow rate in each conduct.

3. A device according to claim 1 or 2, wherein the gas intake manifold (11) forms the outlet housing of said heat exchanger (14).

4. A device according to claim 3, wherein the unit module (20) comprises a monobloc housing (24) defining, with a lid (25), a volume wherein the inlet housing (26) of said heat exchanger (14), the gas intake manifold (11) and a casing (27) for said heat exchanger (14) are arranged.

5. A device according to claim 3, wherein the heat exchanger (14) forms the structural element of the unit module (20), the input housing (26) and the gas intake manifold (11) being fixed on said heat exchanger (14).

6. A device according to claim 5, wherein said heat exchanger (14) comprises a front fixation flange (60), provided with bores (61), and wherein said collector comprises corresponding bores (62), continuing the front fixation flange bores (61), for allowing screws to pass to secure said device to said cylinder head.

7. A device according to any one of claims 1 to 6, wherein an exhaust gas intake module (17) is assembled on the unit module (20) and opens into the gas intake manifold (11).

8. A device according to claim 7, wherein the gas feeding valve (10) fills a regulatory function for the exhaust gas flow (17) introduced into the gas intake manifold (11).

9. A device according to claim 8, wherein the gas feeding valve fills a regulatory function for the flow rate of gas directly introduced into the gas intake manifold and/or a regulatory function for the rate flow of gases introduced into the gas inlet housing.

10. A device according to claim 4, wherein said projections (32a, 32b) extend in parallel beyond said casing (27) and wherein said gas feeding valve (10) is housed between said two projections (32a, 32b).

11. A device according to claim 1, wherein said inlet housing extends along a first longitudinal axis and said outlet housing extends along a second longitudinal axis, said first and second axes being provided in parallel and defining a plane, referred to as an exchange plane, and wherein the inlet pipe of the valve (10a) is oriented perpendicularly to said exchange plane.

12. A device according to claim 11, wherein the direct outlet conduct and/or the indirect outlet conduct comprise gas flow regulating flaps (10b', 10c'), said flaps being provided with a hinging axis oriented parallel to said exchange plane.

13. A thermal engine for automotive vehicle, comprising a combustion chamber (13), a cylinder head (12) forming an inlet of the combustion chamber (13) and an intake device according to one of claims 1 to 12.

## Patentansprüche

1. Gaseinlassvorrichtung zum Einleiten der Gase in den Zylinderkopf einer Wärmekraftmaschine für ein Kraftfahrzeug, umfassend einen Gaseinlassverteiler (11) und ein Gaszufuhrventil (10) des Gaseinlassverteilers (11), wobei das Gaszufuhrventil eine Einlassleitung (10a), eine direkte Auslassleitung (10b) und eine indirekte Auslassleitung (10c) umfasst, wobei das Gaszufuhrventil ausgebildet ist, um das Gas jeweils durch eine direkte Verbindung unter Verwendung der direkten Auslassleitung (10b) und eine indirekte Verbindung durch einen Wärmetauscher (14) unter Verwendung der indirekten Auslassleitung (10c) in den Gaseinlassverteiler (11) einzuleiten, das Gaszufuhrventil (10) und der Gaseinlassverteiler (11) als Moduleinheit (20) integriert sind, die zur Befestigung an dem Kraftmaschinen-Zylinderkopf vorgesehen ist, und der Wärmetauscher (14) ebenfalls in die Moduleinheit (20) integriert ist, **dadurch gekennzeichnet, dass** der Wärmetauscher (14) in ein Gaseinlassgehäuse (26) und ein Gasauslassgehäuse mündet, die indirekte Auslassleitung (10c) in das Gaseinlassgehäuse (26) mündet, die direkte Auslassleitung (10b) in das Auslassgehäuse mündet, und das Gaseinlassgehäuse (26) und das Gasauslassgehäuse jeweils einen Vorsprung (32b, 32a) umfassen, der sich parallel über ein von dem Wärmeaustauscher (14) eingenommenes Gehäuse hinaus erstreckt, wobei das Gaszufuhrventil (10) zwischen den beiden Vorsprüngen (32b, 32a) angeordnet ist, und der Vorsprung (32b) des Einlassgehäuses (26) mit einem Anschluss (23) versehen ist, und der Vorsprung (32a) des Auslassgehäuse ebenfalls mit einem Anschluss (21) versehen ist, wobei die Anschlüsse (23, 21) jeweils für den Einlass von Gas in das Gaseinlassgehäuse (26) und das Gasauslassgehäuse vorgesehen sind, wobei die Anschlüsse (23, 21) entgegengesetzt gelegen sind und die indirekte und direkte Auslassleitung (10c, 10b) jeweils in die Anschlüsse (23, 21) münden.

2. Vorrichtung nach Anspruch 1, wobei das Gaszufuhrventil (10) ein Doppelventil ist, das eine Einlassleitung (10a), eine direkte Auslassleitung (10b) und eine indirekte Auslassleitung (10c) umfasst, wobei das derartige Ventil ferner Mittel zum Steuern der Zufuhrgasdurchflussmenge in jeder Leitung umfasst.

3. Vorrichtung nach Anspruch 1 oder 2, wobei Gaseinlassverteiler (11) das Auslassgehäuse des Wärmetauschers (14) bildet.

4. Vorrichtung nach Anspruch 3, wobei die Moduleinheit (20) ein Monoblock-Gehäuse (24) umfasst, das mit einem Deckel (25) ein Volumen definiert, in welchem das Einlassgehäuse (26) des Wärmetauschers (14), der Gaseinlassverteiler (11) und eine Umhüllung (27) für den Wärmetauscher (14) angeordnet sind.

5. Vorrichtung nach Anspruch 3, wobei der Wärmetauscher (14) das Strukturelement der Moduleinheit (20) bildet, wobei das Eingangsgehäuse (26) und der Gaseinlassverteiler (11) an dem Wärmetauscher (14) befestigt sind.

6. Vorrichtung nach Anspruch 5, wobei der Wärmetauscher (14) einen vorderen Befestigungsflansch (60) umfasst, der mit Bohrungen (61) versehen ist, und wobei der Kollektor entsprechende Bohrungen (62) umfasst, die die vorderen Befestigungsflanschbohrungen (61) fortsetzen, damit Schrauben hindurchtreten können, um die Vorrichtung an dem Zylinderkopf zu befestigen.

7. Vorrichtung nach einem der Ansprüche 1 bis 6, wobei ein Abgaseinlassmodul (17) an die Moduleinheitsmodul (20) montiert ist und in den Gaseinlassverteiler (11) mündet.

8. Vorrichtung nach Anspruch 7, wobei das Gaszufuhrventil (10) eine Regelungsfunktion für den Abgasstrom (17), der in den Gaseinlassverteiler (11) einführt wird, erfüllt.

9. Vorrichtung nach Anspruch 8, wobei das Gaszufuhrventil eine Regelungsfunktion für die Durchflussmenge des Gases, das direkt in den Gaseinlassverteiler eingeführt wird, und/oder eine Regelungsfunktion für die Durchflussmenge der Gase, die in das Gaseinlassgehäuse eingeführt werden, erfüllt.

10. Vorrichtung nach Anspruch 4, wobei die Vorsprünge (32a, 32b) sich parallel über das Gehäuse (27) hinaus erstrecken, und wobei das Gaszufuhrventil (10) zwischen den beiden Vorsprüngen (32a, 32b) untergebracht ist.

11. Vorrichtung nach Anspruch 1, wobei sich das Einlassgehäuse entlang einer ersten Längsachse erstreckt und sich das Auslassgehäuse entlang einer zweiten Längsachse erstreckt, wobei die erste und zweite Achsen parallel vorgesehen sind und eine Ebene definieren, die als Austauschebene bezeichnet wird, und wobei das Einlassrohr des Ventils (10a) senkrecht zu der Austauschebene orientiert ist.

12. Vorrichtung nach Anspruch 11, wobei die direkte Auslassleitung und/oder die indirekte Auslassleitung Gasströmungsregelklappen (10b', 10c") umfassen, wobei die Klappen mit einer Anlenkachse versehen sind, die parallel zu der Austauschebene orientiert ist.

13. Wärmekraftmaschine für ein Kraftfahrzeug mit einer Verbrennungskammer (13), einem Zylinderkopf (12), der einen Einlass der Verbrennungskammer (13) bildet, und einer Einlassvorrichtung nach einem der Ansprüche 1 bis 12.

## Revendications

1. Dispositif d'admission de gaz, pour introduire lesdits gaz dans la culasse d'un moteur thermique pour un véhicule automobile, comprenant un collecteur d'admission de gaz (11) et une vanne d'alimentation en gaz (10) du collecteur d'admission de gaz (11), ladite vanne d'alimentation en gaz comprenant une conduite d'entrée (10a), une conduite de sortie directe (10b) et une conduite de sortie indirecte (10c), ladite vanne d'alimentation en gaz étant apte à introduire lesdits gaz dans le collecteur d'admission de gaz (11), respectivement, par une communication directe utilisant la conduite de sortie directe (10b) et une communication indirecte par le biais d'un échangeur de chaleur (14) utilisant la conduite de sortie indirecte (10c), la vanne d'alimentation en gaz (10) et le collecteur d'admission de gaz (11) étant intégrés en un module unitaire (20) destiné à être fixé sur la culasse du moteur, l'échangeur de chaleur (14) étant également intégré dans le module unitaire (20), **caractérisé en ce que** l'échangeur de chaleur (14) débouche dans une boîte d'entrée de gaz (26) et une boîte de sortie de gaz, la conduite de sortie indirecte (10c) débouche dans la boîte d'entrée de gaz (26), la conduite de sortie directe (10b) débouche dans la boîte de sortie et la boîte d'entrée de gaz (26) et la boîte de sortie de gaz comprennent chacune une excroissance (32b, 32a) s'étendant parallèlement au-delà d'un logement occupé par l'échangeur de chaleur (14), ladite vanne d'alimentation en gaz (10) étant disposée entre lesdites deux excroissances (32b, 32a), et ladite excroissance (32b) de la boîte d'entrée (26) est pourvue d'un orifice (23) et ladite excroissance (32a) de la boîte de sortie est également pourvue d'un orifice (21), lesdits orifices (23, 21) étant prévus, respectivement, pour l'entrée de gaz dans la boîte d'entrée de gaz (26) et la boîte de sortie de gaz, lesdits orifices (23, 21) étant situés en vis-à-vis et lesdites conduites de sortie indirecte et directe (10c, 10b), respectivement, débouchant dans lesdits orifices (23, 21).

2. Dispositif selon la revendication 1, dans lequel la vanne d'alimentation en gaz (10) est une double vanne, comprenant une conduite d'entrée (10a), une conduite de sortie directe (10b) et une conduite de sortie indirecte (10c), ladite vanne comprenant, en outre, des moyens de régulation du débit de gaz d'alimentation dans chaque conduite.

3. Dispositif selon la revendication 1 ou 2, dans lequel le collecteur d'admission de gaz (11) forme la boîte de sortie dudit échangeur de chaleur (14).

4. Dispositif selon la revendication 3, dans lequel le module unitaire (20) comprend un boîtier monobloc (24) définissant, avec un couvercle (25), un volume dans lequel sont agencés la boîte d'entrée (26) dudit échangeur de chaleur (14), le collecteur d'admission de gaz (11) et un logement (27) pour ledit échangeur de chaleur (14).

5. Dispositif selon la revendication 3, dans lequel l'échangeur de chaleur (14) forme l'élément structural du module unitaire (20), la boîte d'entrée (26) et le collecteur d'admission de gaz (11) étant fixés sur ledit échangeur de chaleur (14).

6. Dispositif selon la revendication 5, dans lequel ledit échangeur de chaleur (14) comprend une bride de fixation avant (60), dotée d'alésages (61), et dans lequel ledit collecteur comprend des alésages correspondants (62), prolongeant les alésages de la bride de fixation avant (61), pour permettre à des vis de passer afin d'assujettir ledit dispositif à ladite culasse.

7. Dispositif selon l'une quelconque des revendications 1 à 6, dans lequel un module d'admission de gaz d'échappement (17) est assemblé sur le module unitaire (20) et débouche dans le collecteur d'admission de gaz (11).

8. Dispositif selon la revendication 7, dans lequel la vanne d'alimentation en gaz (10) remplit une fonction de régulation pour le flux de gaz d'échappement (17) introduit dans le collecteur d'admission de gaz (11).

9. Dispositif selon la revendication 8, dans lequel la vanne d'alimentation en gaz remplit une fonction de régulation pour le débit de gaz introduit directement dans le collecteur d'admission de gaz et/ou une fonction de régulation pour le débit de gaz introduit dans le boîtier d'entrée de gaz.

10. Dispositif selon la revendication 4, dans lequel lesdites excroissances (32a, 32b) s'étendent parallèlement au-delà dudit logement (27) et dans lequel ladite vanne d'alimentation en gaz (10) est logée entre lesdites deux excroissances (32a, 32b).

11. Dispositif selon la revendication 1, dans lequel ladite boîte d'entrée s'étend le long d'un premier axe longitudinal et ladite boîte de sortie s'étend le long d'un second axe longitudinal, lesdits premier et second axes étant parallèles et définissant un plan, appelé plan d'échange, et dans lequel le tuyau d'entrée de la vanne (10a) est orienté perpendiculairement audit plan d'échange.

12. Dispositif selon la revendication 11, dans lequel la conduite de sortie directe et/ou la conduite de sortie indirecte comprennent des volets de régulation de flux de gaz (10b', 10c'), lesdits volets étant pourvus d'un axe d'articulation orienté parallèlement audit plan d'échange.

13. Moteur thermique pour véhicule automobile, comprenant une chambre de combustion (13), une culasse (12) formant une entrée de la chambre de combustion (13) et un dispositif d'admission selon l'une des revendications 1 à 12.
